# EUROPÄISCHE PATENTSCHRIFT

(11) **EP 3 292 020 B1**
(45) Veröffentlichungstag und Bekanntmachung des Hinweises auf die Patenterteilung: **12.02.2020**
(21) Anmeldenummer: 15725508.4
(22) Anmeldetag: 04.05.2015
(51) Int. Cl.: B60P 1/64, B60P 3/40, E21F 13/00, E21D 9/08

(54) **TRANSPORTFAHRZEUG, AUFNAHMEGESTELL UND VERFAHREN ZUM VERSETZEN EINER VOLLSCHNITTMASCHINE**
TRANSPORT VEHICLE, RECEIVING FRAME AND METHOD FOR MOVING A FULL THICKNESS CUTTING MACHINE
VÉHICULE DE TRANSPORT, BÂTI DE RÉCEPTION ET PROCÉDÉ PERMETTANT DE DÉPLACER UNE MACHINE POUR LE CREUSEMENT EN SECTION PLEINE

(43) Veröffentlichungstag der Anmeldung: 14.03.2018
(73) Patentinhaber: HAZEMAG & EPR GmbH, 48249 Dülmen (DE)
(72) Erfinder: BAUER, Frank, 44137 Dortmund (DE); KLINKENBERG, Arne, 19246 Valluhn (DE)
(74) Vertreter: Wunderlich & Heim Patentanwälte Partnerschaftsgesellschaft mbB
(86) Internationale Anmeldenummer: PCT/EP2015/059678
(87) Internationale Veröffentlichungsnummer: WO 2016/177388

(56) Entgegenhaltungen:
- WO-A1-89/06207
- WO-A2-2014/108292
- DE-U1- 9 408 617
- GB-A- 2 470 720
- JP-A- 2002 106 289
- US-A1- 2012 189 422

## Beschreibung

Die Erfindung betrifft ein Transportfahrzeug zum Transportieren von Längsmodulen einer Vollschnittmaschine gemäß dem Anspruch 1 ein Aufnahmegestell für ein Transportfahrzeug gemäß Anspruch 7 sowie ein Verfahren zum Versetzen einer Vollschnittmaschine, welche aus mindestens zwei Längsmodulen aufgebaut ist, gemäß dem Oberbegriff des Anspruchs 10.

Vollschnittmaschinen werden zum Abbau von Gesteinsmaterial unter Tage eingesetzt, wobei eine Bergbaustrecke gebildet wird. Derartige Vollschnittmaschinen stellen komplexe Fertigungsanlagen dar, welche einen Schneidkopf, eine Verspann- und Vorschubeinrichtung sowie zahlreiche weitere Einrichtungen, wie Förderbänder oder Transportschnecken für die Abförderung des gelösten Gesteinsmaterials sowie entsprechende Versorgungseinrichtungen, aufweisen. Der rotierend angetriebene Schneidkopf arbeitet im Vollschnitt das Gesteinsmaterial ab, so dass eine hohe Abbaugeschwindigkeit und eine effiziente Herstellung der Strecken erzielbar sind. Derartige Vollschnittmaschinensysteme können eine Gesamtlänge von bis zu 100 m und mehr aufweisen.

Die Montage und Demontage einer derartigen Vollschnittmaschine ist mit einem ganz erheblichen Arbeits- und Zeitaufwand verbunden und kann bis zu mehreren Wochen dauern. Solche Vollschnittmaschinen werden daher zumeist zur Herstellung längerer Bergbaustrecken eingesetzt, welche im Wesentlichen geradlinig verlaufen.

Aus der gattungsbildenden JP 2002-106289 A ist bekannt, eine Vollschnittmaschine und mehrere Anhänger auf Transportwägen zu transportieren, welche jeweils eine drehbare Plattform aufweisen.

Die WO 89/06207 A1 betrifft ein Mehrzweckfahrzeug, welches eine Vielzahl unterschiedlicher Geräte aufnehmen kann.

Der Erfindung liegt die **Aufgabe** zugrunde, die Einsatzflexibilität und die Handhabbarkeit bei Vollschnittmaschinen zu verbessern.

Nach der Erfindung wird die Aufgabe durch ein Transportfahrzeug zum Transportieren von Längsmodulen einer Volischnittmaschine gemäß dem Anspruch 1, ein Aufnahmegestell gemäß Anspruch 7 beziehungsweise durch ein Verfahren zum Versetzen einer Vollschnittmaschine gemäß dem Anspruch 10 gelöst. Bevorzugte Ausführungsformen der Erfindung sind in den jeweils abhängigen Ansprüchen angegeben.

Bei einem erfindungsgemäßen Transportfahrzeug zum Transportieren von Längsmodulen einer Vollschnittmaschine ist ein Fahrgestell vorgesehen, welches zwei Fahrschiffe aufweist, zwischen denen ein Aufnahmeraum für ein Aufnahmegestell für ein Längsmodul der Vollschnittmaschine ausgebildet ist.

Ein Grundgedanke der Erfindung besteht darin, ein kompaktes Transportfahrzeug zum Transportieren eines Längsmodules einer kompakten Vollschnittmaschine vorzusehen. Das erfindungsgemäße Transportfahrzeug weist ein Fahrgestell mit zwei Fahrschiffen auf, wobei ein Freiraum zwischen den beiden Fahrschiffen verbleibt. Dieser Freiraum wird als ein Aufnahmeraum für ein Aufnahmegestell genutzt, auf welchem ein Längsmodul der Vollschnittmaschine angeordnet werden kann. Es kann so eine geringe Bau- und Transporthöhe erreicht werden, so dass ein Transportieren und Handhaben eines trommelförmigen Längsmoduls der Tunnelbohrmaschine auch in beengten Verhältnissen unter Tage effizient erfolgen kann. Die länglichen Fahrschiffe können mit Rädern, Schreitwerken oder vorzugsweise mit Raupenketten zum Bilden von Raupenfahrschiffen versehen sein.

Ein weiterer Aspekt der Erfindung besteht darin, dass das Transportfahrzeug für eine Vollschnittmaschine vorgesehen wird, welche in axialer Längsrichtung in mehrere Längsmodule unterteilt werden kann. So kann auch eine relativ große Vollschnittmaschine unter Tage effizient transportiert und umgesetzt werden.

Eine weiterer Aspekt der Erfindung besteht darin, dass das Aufnahmegestell als eine Palette ausgebildet ist, welche lösbar an dem Fahrgestell angebracht ist. Das Aufnahmegestell ist dabei als eine Palette ausgebildet. Das Aufnahmegestell ist weiterhin so gestaltet, dass dieses vorzugsweise in einer axialen Richtung von vorne, von einer offenen Stirnseite in das Transportfahrzeug einführbar und wieder ausführbar ist.

Eine weitere bevorzugte Ausführungsvariante des erfindungsgemäßen Transportfahrzeuges kann darin gesehen werden, dass das Aufnahmegestell eine obere Aufnahmeseite aufweist, welche zum Ablegen und Halten eines trommelförmigen Längsmoduls ausgebildet ist. So können etwa nach oben gerichtete Stützen vorgesehen sein. Vorzugsweise ist die obere Aufnahmeseite des Aufnahmegestelles zylindersegmentförmig ausgebildet. Dabei entspricht der Radius etwa dem Radius des etwa trommelförmigen Längsmoduls der Vollschnittmaschine. Vorzugsweise ist das Aufnahmegestell so ausgebildet, dass ein Längsmodul in beiden axialen Ausrichtungen angeordnet werden kann.

Weiterhin ist es nach einer erfindungsgemäßen Ausführungsform bevorzugt, dass das Fahrgestell eine U-förmige Anordnung mit zwei Längsschenkeln aufweist und dass an jedem Längsschenkel jeweils ein Fahrschiff angeordnet ist. Das Fahrgestell bildet so eine zu einer Stirnseite offene Anordnung, wobei entlang den Längsschenkeln außenseitig jeweils ein Fahrschiff mit vorzugsweise umlaufenden Raupenketten angebracht ist. Dies erlaubt ein Ein- und Ausschieben des trommelförmigen Längsmoduls an der offenen Vorderseite, wobei der Bauraum zwischen den beiden Fahrschiffen zur Aufnahme des Aufnahmegestells mit dem Längsmodul genutzt werden kann. Grundsätzlich könnten statt Raupenketten auch Räder oder ein Schreitwerk zum Fortbewegen eingesetzt werden. Die Räder können vorzugsweise einzeln angetrieben sein.

Gemäß einer weiteren Ausführungsform der Erfindung ist es vorteilhaft, dass an dem Fahrgestell eine Halterung mit mindestens einer schienenartigen Leiste vorgesehen ist, auf welcher das Aufnahmegestell aufliegt. Die schienenartige Leiste kann dabei so ausgeführt sein, dass das Aufnahmegestell darauf zumindest teilweise verschiebbar geführt ist. Das Aufnahmegestell kann so beispielsweise nach vorne zu einer vorderen Öffnung ausgeschoben werden. Alternativ oder ergänzend kann die mindestens eine schienenartige Leiste auch so gestaltet sein, dass das Aufnahmegestell relativ zum Fahrgestell von oben auf die Leiste aufgesetzt wird.

Dabei besteht eine bevorzugte Weiterbildung des erfindungsgemäßen Transportfahrzeuges darin, dass die Halterung zwei schienenartige Leisten aufweist, wobei je eine Leiste entlang den Fahrschiffen angeordnet ist. Das Aufnahmegestell wird so lediglich im Randbereich gehalten. Dies reduziert bei einem Ausschieben des Aufnahmegestells die Reibungsflächen und damit die zu überwindenden Reibungskräfte. Grundsätzlich kann es vorgesehen sein, in der einen Leiste oder den beiden Leisten Rollen oder andere Elemente zur Reibungsreduzierung vorzusehen. Diese können alternativ oder ergänzend auch an dem Aufnahmegestell vorgesehen sein. Vorzugsweise kann die Halterung selbst auch U-förmig gestaltet sein, wobei eine entsprechende Halteleiste auch im Bereich des Querschenkels des Fahrgestelles angeordnet ist.

Nach einer weiteren Ausführungsvariante der Erfindung ist es zweckmäßig, dass an einem Querschenkel des U-förmigen Fahrgestells eine Antriebs- und Steuereinheit angeordnet ist. Die Antriebs- und Steuereinheit ist somit am rückseitigen Ende des Transportfahrzeuges gegenüberliegend zu der offenen Frontseite des Transportfahrzeuges angeordnet. Dies sorgt bei einem Aufsetzen des Aufnahmegestells mit einem Längsmodul der Vollschnittmaschine für eine ausgewogenere Gewichtsverteilung.

Die Antriebs- und Steuereinheit kann insbesondere einen Motor, insbesondere einen Verbrennungs-, Hydraulik- oder Elektromotor, umfassen. Insbesondere bei einem Elektromotor kann eine Batterieeinheit vorgesehen sein, mit welcher ausreichend Strom für den Betrieb des Transportfahrzeuges speicherbar ist. Vorzugsweise ist das Transportfahrzeug ferngesteuert. Dies kann über eine drahtlose oder drahtgebundene Steuerung erfolgen. Alternativ oder ergänzend kann auch ein Bedienstand für eine Bedienperson an der Antriebs- und Steuereinheit vorgesehen sein.

Die Erfindung umfasst weiterhin ein Aufnahmegestell für ein Transportfahrzeug für ein Längsmodul einer Vollschnittmaschine, wobei das Aufnahmegestell als eine Palette ausgebildet ist, deren obere Aufnahmeseite zum Ablegen und Halten eines trommelförmigen Längsmoduls ausgebildet ist. Das Aufnahmegestell ist speziell für das Einsetzen und Herausnehmen in ein Transportfahrzeug vorgesehen, welches vorzugsweise dem vorausgehend beschriebenen Transportfahrzeug entspricht. Die obere Aufnahmeseite kann vertikal nach oben ragende Stützen und/oder konkav entsprechend einem Segment einer Zylinderwand ausgebildet sein. Ein Radius der konkaven Auskehlung entspricht dabei im Wesentlichen dem Radius des Längsmoduls der Vollschnittmaschine. Das Aufnahmegestell ist ein Adapterelement zwischen den unterschiedlichen Längsmodulen und dem Transportfahrzeug. Die obere Aufnahmeseite kann je nach Längsmodul unterschiedlich gestaltet sein, während die Unterseite der Aufnahmegestelle vorzugsweise an das gleiche Transportfahrzeug angepasst ist.

Eine bevorzugte Ausführungsform des erfindungsgemäßen Aufnahmegestells besteht darin, dass an der Unterseite höhenverstellbare Füße angeordnet sind. Mit den Füßen kann das Aufnahmegestell auf einer Montageplattform oder auf dem Boden abgestellt werden. Die Füße können einem Höhenausgleich dienen. Insbesondere sind die Füße so ausgebildet, dass ein Transportfahrzeug mit einem U-förmigen Fahrgestell und einer offenen Frontseite mit einer Aufnahmehalterung unter das Aufnahmegestell fahren kann. Auf diese Weise kann das Aufnahmegestell auf das Transportfahrzeug aufgeschoben oder durch Einfahren der Füße auf dem Fahrgestell des Transportfahrzeuges abgesetzt werden.

Dabei ist es nach einer Weiterbildung der Erfindung besonders zweckmäßig, dass entlang der Längsseite der Palette Auflageleisten vorgesehen sind. Hierdurch kann ein Aufnehmen oder Abgeben der Palette durch ein Aufschieben und/oder ein Aufsetzen von oben erfolgen. Die Auflageleisten der plattenartigen Palette sind dabei korrespondierend zu den schienenartigen Leisten der Halterung an dem Transportfahrzeug ausgebildet. An den Auflageleisten des Aufnahmegestelles können Rollen oder andere reibungsmindernde Elemente angeordnet sein.

Das erfindungsgemäße Verfahren zum Versetzen einer Vollschnittmaschine, welche aus mindestens zwei Längsmodulen aufgebaut ist, ist dadurch gekennzeichnet, dass die Längsmodule voneinander gelöst werden und dass die gelösten Längsmodule nacheinander mit einem Aufnahmegestell von einem Transportfahrzeug aufgenommen werden, wie es zuvor beschrieben worden ist.

Das erfindungsgemäße Verfahren zum Versetzen einer Vollschnittmaschine umfasst dabei im Wesentlichen zwei Aspekte. Gemäß einem ersten Aspekt ist die Vollschnittmaschine aus definierten Längsmodulen aufgebaut, welche relativ einfach voneinander gelöst werden können. Dabei sind die lösbaren Längsmodule so dimensioniert, dass diese von einem Transportfahrzeug aufgenommen und auch unter Tage bei beengten Raumverhältnissen gehandhabt und verfahren werden können. Vorzugsweise weisen die Längsmodule eine Länge von 2 m bis 5 m und einen Durchmesser von 1,5 m bis 4 m auf. Davon abweichende Größen sind jedoch nicht ausgeschlossen.

Ein weiterer Aspekt des erfindungsgemäßen Verfahrens besteht darin, ein Transportfahrzeug vorzusehen, welches ein solches Längsmodul aufnehmen kann. Hierzu ist ein Aufnahmegestell zum Aufnehmen des trommelförmigen Längsmodules vorgesehen. Das Aufnahmegestell kann dabei als ein universelles Aufnahmegestell ausgebildet sein, mit welchem mehrere unterschiedliche Längsmodule in beiden Längsrichtungen aufgenommen und gehalten werden können. Alternativ kann das Aufnahmegestell aber individuell auch auf jedes der Längsmodule ausgebildet sein.

Vorzugsweise wird das Längsmodul bei der Demontage der Vollschnittmaschine unmittelbar auf einem Aufnahmegestell abgelegt. Das Aufnahmegestell mit dem Längsmodul wird dann von dem Transportfahrzeug aufgenommen und verfahren. Bei der Demontage schiebt sich die Vollschnittmaschine schrittweise in ein bereitgestelltes Aufnahmegestell. Das jeweilige Längsmodul wird dann abgebaut und mit dem Aufnahmegestell verfahren. In entsprechender Weise wird beim Zusammenbau ein Aufnahmegestell mit einem Längsmodul an die Montagestelle transportiert. Das Längsmodul wird an der Vollschnittmaschine befestigt und von dieser von dem Aufnahmegestell gezogen.

Grundsätzlich werden die einzelnen Längsmodule von demselben Transportfahrzeug aufgenommen. Die Längsmodule können dann zunächst an einer Zwischenlagerstätte abgesetzt oder direkt zu einem Montageplatz, insbesondere mit einer Montageplattform, transportiert und abgesetzt werden. Der Montageplatz befindet sich vorzugsweise in einer vorab konventionell hergestellten Start-/Schlussstrecke für eine neue Streckenauffahrung mit der Vollschnittmaschine.

Vorzugsweise wird mit der kompakten Vollschnittmaschine mit den Längsmodulen eine Herrichtungs- oder Abbaustrecke zwischen zwei Hauptstrecken aufgefahren. Ausgehend von der ersten Hauptstrecke und der zugehörigen Start-/Schussstrecke wird die Herrichtungs- oder Abbaustrecke bis zu der zweiten vorgeleisteten Start-/Schlussstrecke und der zugehörigen zweiten Hauptstrecke ausgebildet, in welcher dann die Vollschnittmaschine in die Längsmodule zerlegt und mit dem Transportfahrzeug weiterverfahren wird. Bei Erreichen der zweiten Hauptstrecke wird zunächst ein erstes Längsmodul mit dem Schneidkopf der Vollschnittmaschine gelöst und mit dem Transportfahrzeug weitertransportiert. Anschließend wird entsprechend mit den weiteren Längsmodulen der Reihe nach verfahren. Diese können insbesondere ein Längsmodul mit der Vortriebseinheit, ein Längsmodul mit der Verspann- und Vorschubeirichtung, ein Längsmodul mit einer Ausbaueinheit und/oder ein Längsmodul mit einer Nachläufereinheit zur Versorgung der Vollschnittmaschine sein.

Eine bevorzugte Variante des erfindungsgemäßen Verfahrens besteht darin, dass ein palettenartiges Aufnahmegestell mit einem Längsmodul zunächst in einer ersten Längsrichtung aufgenommen wird und dass das Aufnahmegestell mit dem Längsmodul von dem ersten Transportfahrzeug abgesetzt und anschließend in umgekehrter Längsrichtung wieder aufgenommen wird. Für diese Verfahrensvariante können insbesondere zwei Transportfahrzeuge vorgesehen sein, welche vorzugsweise gleich ausgebildet sind. Bei Durchtritt der Vollschnittmaschine zu der zweiten Hauptstrecke wird beispielsweise das Längsmodul mit dem Schneidkopf zunächst von einem Transportfahrzeug über das vordere offene Ende so aufgenommen, dass eine Schneid- oder Kopfplatte mit den Abbauwerkzeugen des Schneidkopfes zur Antriebs- und Steuereinheit des Transportfahrzeuges gerichtet ist. Durch ein Übergeben des Längsmoduls auf ein zweites Transportfahrzeug wird sozusagen ein Wenden des Längsmoduls um 180° erreicht, da nunmehr auf dem zweiten Transportfahrzeug die Kopfplatte des Schneidkopfes wieder zum vorderen Ende gerichtet ist. In dieser Position kann das Längsmodul nunmehr an dem Montageplatz, insbesondere einer Startstrecke, zur Auffahrung der nächsten Herrichtungs- oder Abbaustrecke in Vortriebsrichtung wieder zusammengesetzt werden.

Ein derartiges Absetzen und Wiederaufnehmen eines Längsmoduls ist grundsätzlich auch mit nur einem Transportfahrzeug möglich, sofern ausreichend Raum für ein Absetzen des Längsmodules und ein Rangieren des Transportfahrzeuges besteht. Alternativ könnte auch eine Wende- oder Umkehreinrichtung für das Längsmodul vorgesehen sein. Dies könnte etwa durch eine horizontale Schwenkplatte erreicht werden, welche um 180° mit dem Längsmodul verschwenkbar ist.

Grundsätzlich kann ein erfindungsgemäßes Versetzen einer Vollschnittmaschine an einem beliebigen Ort erfolgen. Nach einer Ausführungsvariante der Erfindung ist es besonders vorteilhaft, dass das Verfahren unter Tage durchgeführt wird. Insbesondere ist das Versetzen einer Vollschnittmaschine mit Längsmodulen zur Ausbildung kleiner Nebenstrecken zwischen zwei Hauptstrecken oder im bergmännischen Abbau von Lagerstätten unter Verwendung von Vollschnittmaschinen einsetzbar.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Darstellung des Verfahrens zum Abbau von Gesteinsmaterial unter Tage bei der Herstellung einer Herrichtungs- oder Abbaustrecke;
- Fig. 2: eine schematische perspektivische Ansicht zum Bilden einer Herrichtungs- oder Abbaustrecke;
- Fig. 3: eine perspektivische Schnittansicht, welche den Betrieb einer Vollschnittmaschine gemäß der Erfindung zeigt;
- Fig. 4: eine perspektivische Ansicht zu einer Ausführungsform einer Vollschnittmaschine für die Erfindung;
- Fig. 5: eine Seitenansicht der Vollschnittmaschine von Fig. 4;
- Fig. 6: eine perspektivische Ansicht einer Vortriebseinheit im eingefahrenen Zustand einer Vollschnittmaschine nach Fig. 4 und Fig. 5;
- Fig. 7: eine perspektivische Ansicht der Vortriebseinheit von Fig. 6 in einem ausgefahrenen Zustand;
- Fig. 8: eine perspektivische Ansicht einer Nachlaufeinheit einer erfindungsgemäßen Vollschnittmaschine;
- Fig. 9: eine perspektivische Ansicht eines Transportfahrzeuges gemäß der Erfindung;
- Fig. 10: eine perspektivische Ansicht einer Aufnahmeeinheit gemäß der Erfindung für das Transportfahrzeug von Fig. 9;
- Fig. 11: eine perspektivische Ansicht des Transportfahrzeuges von Fig. 9 mit einer Aufnahmeeinheit;
- Fig. 12: eine perspektivische Ansicht eines Transportfahrzeuges mit einem als Längsmodul ausgebildeten Schneidkopf;
- Fig. 13: eine perspektivische Ansicht des Transportfahrzeuges mit einem als Verspann- und Vorschubeinrichtung ausgebildeten Längsmodul; und
- Fig. 14: eine perspektivische Ansicht des erfindungsgemäßen Transportfahrzeuges mit einem als Verspann und Ausbaueinheit ausgebildeten Längsmodul.

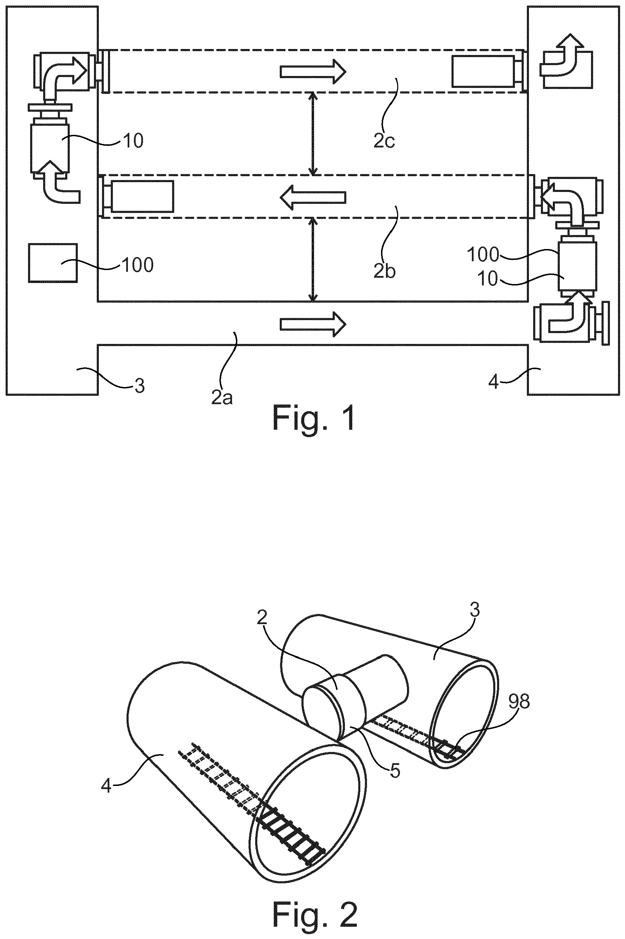

Gemäß der schematischen Darstellung von Fig. 1 werden zunächst eine erste Hauptstrecke 3 und eine zweite Hauptstrecke 4 in einem Abstand zueinander ausgebildet, wobei ein Zwischenbereich umschlossen ist. Die beiden Hauptstrecken 3, 4 können bereits mit einer Vollschnittmaschine oder mit einem anderen Abtragungsgerät hergestellt werden. Der Abstand der beiden Hauptstrecken 3, 4 kann einige Meter bis zu mehreren 100 Metern betragen. Andere Größen sind jedoch von der Erfindung nicht ausgeschlossen. Die beiden Hauptstrecken 3, 4 verlaufen vorzugsweise parallel zueinander und auf einem gleichen Höhenniveau. Die beiden Hauptstrecken 3, 4 können aber unterschiedlich verlaufen, insbesondere längs mit einem Versatz oder in einem Winkel zueinander verlaufen und beispielsweise zwei miteinander verbundene Schenkel eines U-förmigen Streckensystems sein.

Ausgehend von der ersten Hauptstrecke 3 wird eine Vollschnittmaschine 10 quer zur Längsrichtung der ersten Hauptstrecke 3 in einer ersten Vortriebsrichtung in Richtung auf die zweite Hauptstrecke 4 unter Tage in einer vorab konventionell hergestellten Start-/Schlusstrecke montiert. Von dieser Position aus wird die Vollschnittmaschine durch das Gesteinsmaterial vorgetrieben, wobei Gesteinsmaterial abgebaut und eine erste Herrichtungs- oder Abbaustrecke 2a erstellt wird. Bei Erreichen der zweiten Start-/Schlussstrecke 4 wird die Vollschnittmaschine 10 von einem Transportfahrzeug 100 aufgenommen und zum Ausbilden einer zweiten Herrichtungs- oder Abbaustrecke 2b in der zweiten Hauptstrecke 4 weitertransportiert. Dabei wird die Vollschnittmaschine 10 mit dem Transportfahrzeug 100, welches auch als Handhabungsfahrzeug bezeichnet werden kann, um 180° gewendet. Sofern die Hauptstrecken 3, 4 ausreichend groß dimensioniert sind, kann die Vollschnittmaschine 10 als eine kompakte Einheit verfahren und gewendet werden.

Anschließend wird mittels der Vollschnittmaschine 10 eine zweite Herrichtungs- oder Abbaustrecke 2b von der zweiten Hauptstrecke 4 wieder zurück in Richtung der ersten Hauptstrecke 3 durch das Gestein aufgefahren. Die zweite Vortriebsrichtung ist dabei im Wesentlichen der ersten Vortriebsrichtung entgegengesetzt, wie in Fig. 1 durch die Pfeile dargestellt ist. Ein Mindestabstand der ersten Herrichtungs- oder Abbaustrecke 2a zu der zweiten Herrichtungs- oder Abbaustrecke 2b ist abhängig von der Standfestigkeit des Gesteins und kann einige Meter bis zu mehreren Dutzenden Metern betragen. Vorzugsweise ist ein Abstand zwischen 10 bis 50 Metern vorgesehen.

Nach Erreichen der ersten Hauptstrecke 3 kann die Vollschnittmaschine 10 abermals von einem Transportfahrzeug 100 aufgenommen, gewendet und zum Auffahren einer dritten Herrichtungs- oder Abbaustrecke 2c weitertransportiert werden. Das Bilden einer Herrichtungs-oder Abbaustrecke 2 kann so oft wiederholt werden, wie dies gewünscht oder notwendig ist. Hierbei wird eine leiterartige oder mäanderförmige Streckenstruktur erstellt. Eine derartige Anordnung ist etwa im bergmännischen Abbau von Bodenschätzen, etwa von Diamanten zweckmäßig.

Gemäß Fig. 2 ist eine weitere Anordnung mit einer ersten Hauptstrecke 3 und einer zweiten Hauptstrecke 4 dargestellt, welche über eine Herrichtungs-oder Abbaustrecke 2 miteinander verbunden werden sollen. Aufgrund des relativ kleinen Durchmessers der röhrenartigen Hauptstrecken 3, 4 wird in dem Zwischenraum zwischen den beiden Hauptstrecken 3, 4 zunächst eine Start-/Schlussstrecke 5 konventionell erstellt, welche zur Montage und Demontage der Vollschnittmaschine 10 genutzt werden kann. Bei der Ausführung gemäß Fig. 2 ist für das Transportfahrzeug 100 eine Transportbahn 98 aus Gleisschienen vorgesehen.

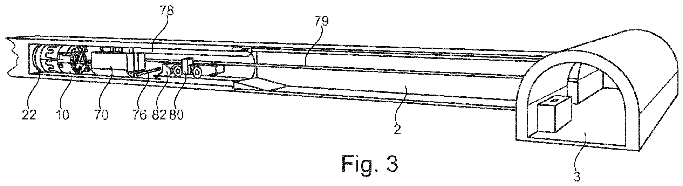

Gemäß Fig. 3 ist eine weitere Ausführungsform mit einer erfindungsgemäßen Vollschnittmaschine 10 dargestellt, welche ausgehend von einer ersten Hauptstrecke 3 in einer horizontalen Querrichtung unter Tage durch Gesteinsmaterial vorgetrieben wird. Die etwa zylinderförmige Vollschnittmaschine 10 mit einem rotierenden Schneidkopf 22 erstellt eine im Wesentlichen zylindrische Herrichtungs- oder Abbaustrecke 2. Die Vollschnittmaschine 10 weist eine angehängte Nachläufereinheit 70 auf, zu welcher das abgearbeitete Gesteinsmaterial von dem Schneidkopf 22 am vorderen Ende der Vollschnittmaschine 10 zum rückwärtigen Ende transportiert und mittels einer Fördereinrichtung 76 an ein Förderfahrzeug 80 übergeben wird. Das Förderfahrzeug 80 ist im dargestellten Ausführungsbeispiel als ein sogenannter Fahrlader mit einer Ladeschaufel 82 zur Aufnahme des Gesteinsmaterials ausgebildet. Die Nachlaufeinheit 70 ist mit einer Abluftrohrleitung 78 und weiteren Versorgungsleitungen 79 verbunden, um eine entsprechende Ver- und Entsorgung an der Vollschnittmaschine 10 bereitzustellen.

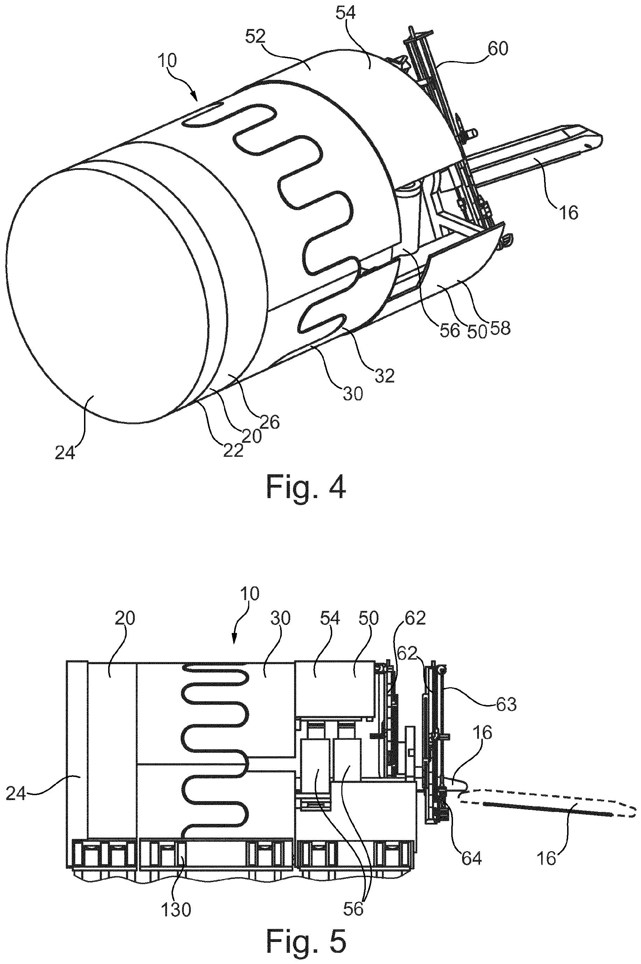

Der Aufbau einer erfindungsgemäßen Vollschnittmaschine 10 ist näher in den Figuren 4 und 5 dargestellt. Die gezeigte Vollschnittmaschine 10 weist ein erstes Längsmodul 20, ein zweites Längsmodul 30 und ein drittes Längsmodul 50 auf, welche axial lösbar miteinander verbunden sind. Das erste Längsmodul 20 ist als ein Schneidkopf 22 ausgebildet, an dessen Vorderseite eine rotierend angetriebene Kopfplatte 24 angeordnet ist. An der Stirnseite der Kopfplatte 24 sind zum Abbau des Gesteinsmaterials nicht dargestellte Abbauwerkzeuge angeordnet, beispielsweise drehbar gelagerte Rollenmeißel.

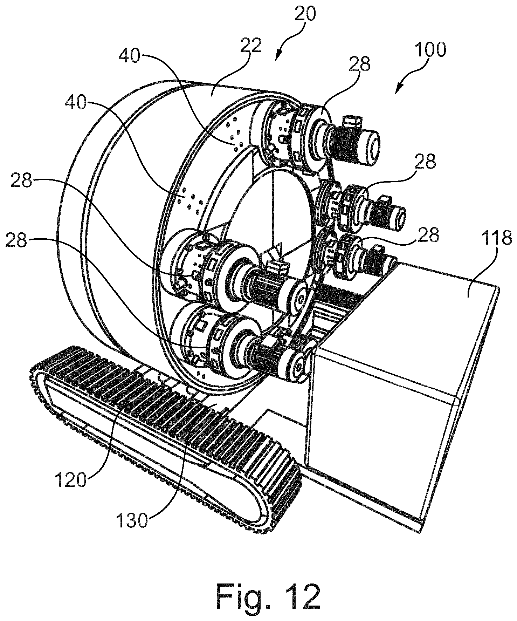

Der Schneidkopf 22 arbeitet über den gesamten Durchmesser der kreisscheibenförmigen Kopfplatte 24 Gesteinsmaterial ab, so dass eine zylindrische Herrichtungs-oder Abbaustrecke 2 aufgefahren wird. Die Kopfplatte 24 ist drehbar um eine Längsachse an einem Grundkörper 26 des Schneidkopfes 22 gelagert und über mehrere Drehantriebe 28, welche in Fig. 12 dargestellt sind, rotierend angetrieben.

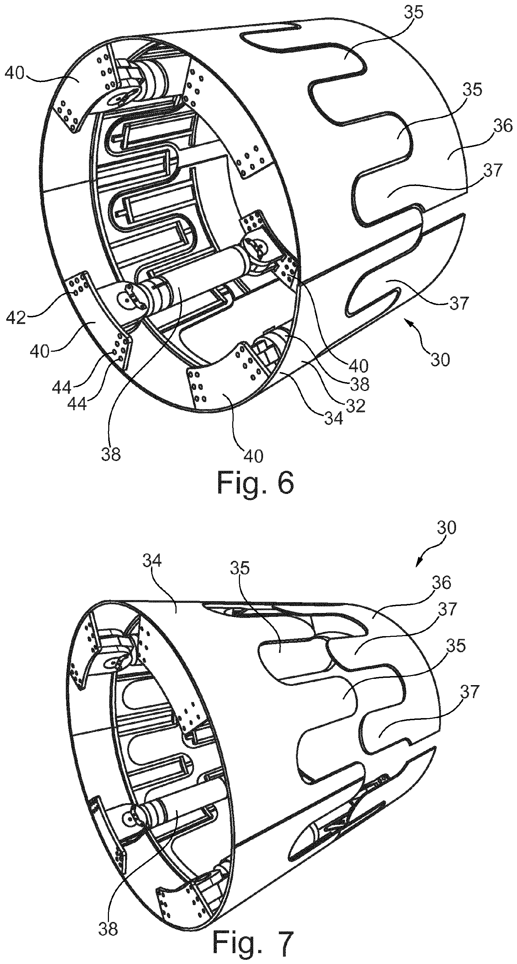

Das als Schneidkopf 22 ausgebildete erste Längsmodul 20 ist über nicht dargestellte Verbindungsmittel lösbar mit dem zweiten Längsmodul 30 verbunden, welches als Vortriebseinheit 32 ausgebildet ist. Die Vortriebseinheit 32 wird nachfolgend näher im Zusammenhang mit den Figuren 6 und 7 erläutert.

Im Anschluss an das zweite Längsmodul ist ebenfalls lösbar über Verbindungsmittel das dritte Längsmodul 50 angekoppelt, welches eine Verspanneinheit 52 und eine Ausbaueinheit 60 aufweist. Die Verspanneinheit 52 weist ein trommelsegmentförmiges Bodenelement 58 auf, an welchem in radialer Richtung nach oben verstellbar ein trommelsegmentförmiges Spannelement 54 verstellbar gelagert ist. Das Spannelement 54 kann über hydraulische Spannzylinder 56 radial nach außen verstellt werden, um die Vollschnittmaschine 10 gegenüber der umgebenden Streckenwand zu verspannen und zu fixieren.

Vom Schneidkopf 22 abgetragenes Gesteinsmaterial wird durch die Vollschnittmaschine 10 von Durchgangsöffnungen in die Kopfplatte 24 über eine Abfördereinrichtung 16, welche eine oder mehrere Förderschnecken, Transportketten und/oder Transportbänder aufweisen kann, zu einem rückwärtigen Bereich gefördert. An einem rückwärtigen Bereich des dritten Längsmoduls 50 ist weiterhin eine Ausbaueinheit 60 mit zwei um die Längsachse verschwenkbaren Lafetten 62 angeordnet. Entlang der Lafetten 62 ist jeweils ein Bohrantrieb 64 verfahrbar angeordnet. Über den Bohrantrieb 64 kann so ein stangenförmiger Anker 63 in die umgebende Streckenwand eingebracht werden, um diese so zu stabilisieren.

Das zweite Längsmodul 30, welches als Vortriebseinheit 32 ausgebildet ist, wird in den Figuren 6 und 7 näher dargestellt. Die Vortriebseinheit 32 weist ein trommelförmiges Vorderteil 34 und ein trommelförmiges Hinterteil 36 auf. Deren Gehäuse weisen jeweils an den zugewandten Seitenkanten zungenartige vordere Vorsprünge 35 und hintere Vorsprünge 37 auf. Die vorderen Vorsprünge 35 und die hinteren Vorsprünge 37 greifen zahnartig ineinander, so dass in einem eingefahrenen Zustand das Vorderteil 34 und das Hinterteil 36 eine im Wesentlichen geschlossene trommelförmige Umfangswand bilden.

Das Vorderteil 34 und das Hinterteil 36 sind axial verfahrbar zueinander gelagert und über beispielsweise insgesamt vier gleichmäßig über den Umfang verteilte innere Vorschubzylinder 38 axial auseinander fahrbar und wieder einfahrbar. Die Vorschubzylinder 38 stützten sich jeweils an radial nach innen gerichtete Stützplatten 42 ab, welche gleichzeitig als Verbindungsmittel 40 zum lösbaren Verbinden der angrenzenden Längsmodule ausgebildet sind. Hierzu sind in den Stützplatten 42 jeweils mehrere Verbindungslöcher 44 eingebracht, so dass bei Anliegen einer korrespondierenden Stützplatte des angrenzenden Längsmoduls über Schraubbolzen eine lösbare Verbindung geschaffen werden kann.

Die Vortriebseinheit 32 ist in Fig. 6 in einem axial eingefahrenen Zustand dargestellt. Bei einem Fixieren der Vollschnittmaschine 10 gegenüber der Streckenwand mittels der Spanneinheit 52 kann ein Vorschub des Schneidkopfes 22 erfolgen. Hierzu werden in der Vortriebseinheit 32 die Vorschubzylinder 38 axial ausgefahren, so dass der Schneidkopf 22 mit einer vorgegebenen Andruckkraft gegen die Ortsbrust des anstehenden Gebirges gedrückt wird. Nach Erreichen des maximalen Vorschubs wird die Spanneinheit 52 gelöst. Anschließend kann durch Einfahren der Vorschubzylinder 38 das Hinterteil 36 wieder in Vorschubrichtung in das Vorderteil 34 der Vorschubeinheit 32 eingefahren werden. Anschließend kann durch erneutes Verspannen der Vollschnittmaschine 10 mittels der Spanneinheit 52 ein weiterer Vorschubschritt erfolgen.

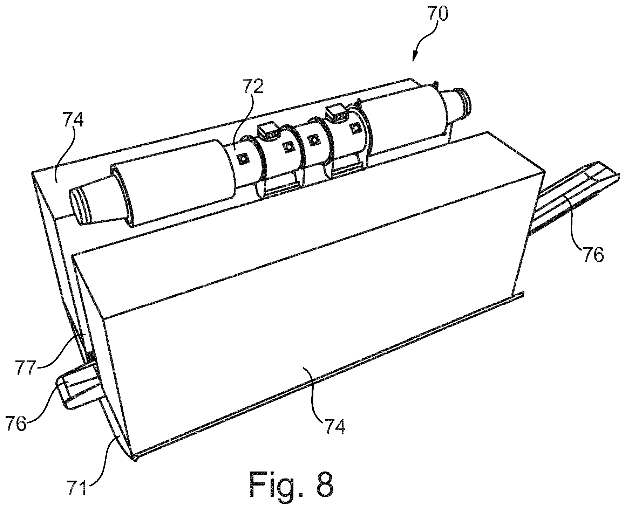

Die Nachläufereinheit 70 der erfindungsgemäßen Vollschnittmaschine 10 ist in Fig. 8 näher dargestellt. Auf einer trommelsegmentförmigen Bodenplatte 71 sind zwei kastenförmige Versorgungseinrichtungen 74 angeordnet, zwischen denen sich eine bandförmige Fördereinrichtung 76 zum Transportieren des abgetragenen Gesteinsmaterials erstreckt. Innerhalb der Nachlaufeinheit 70 ist ein Aufnahmebereich 77 zum Durchführen des gelösten Gesteinsmaterials vorgesehen. Die Fördereinrichtung 76 kann aus dem Aufnahmebereich 77 das gelöste Gesteinsmaterial nach hinten zu einem Förderfahrzeug 80 abfördern, welches in Fig. 3 dargestellt ist. An einer Oberseite der Nachläufereinheit 70, welche auch als Versorgungseinheit bezeichnet werden kann, ist eine Absaugeinrichtung 72 zum Absaugen von Staub angeordnet. Die Absaugeinrichtung 72 ist mit der Abluftrohrleitung 78 gemäß Fig. 3 verbunden, um Staub aus der Herrichtungs- oder Abbaustrecke 2 abzuführen. Die Nachlaufeinheit 70 ist an das vorausgehende dritte Längsmodul 50 lösbar gekoppelt und kann als ein viertes Längsmodul angesehen werden. Oberhalb der Bodenplatte 71 können Anker 63 für die Ausbaueinheit 60 gelagert werden. Weiterhin ist die Vollschnittmaschine 10 mit einer grundsätzlich bekannten Steuereinrichtung versehen, welche ein richtungsgenaues Auffahren der Herrichtungs- oder Abbaustrecke 2 sicherstellt.

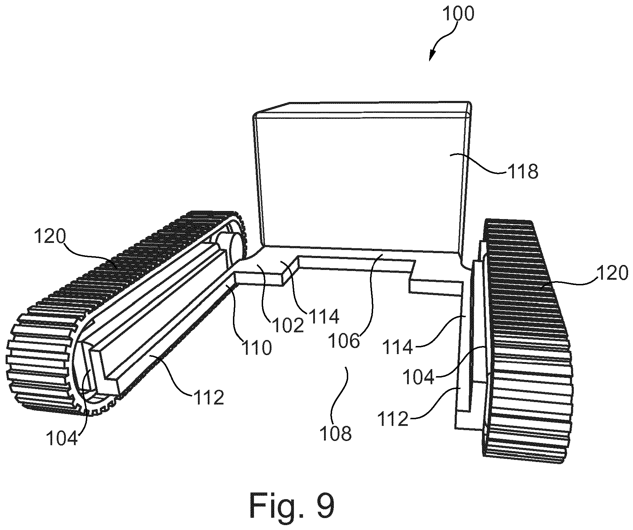

Im Zusammenhang mit den Figuren 9 bis 14 wird ein erfindungsgemäßes Transportfahrzeug 100 näher erläutert, welches für ein erfindungsgemäßes Verfahren zum Handhaben und Transportieren einer erfindungsgemäßen Vollschnittmaschine 10 verwendbar ist. Das Transportfahrzeug 100 weist ein U-förmiges Fahrgestell 102 mit zwei parallelen Längsschenkeln 104 auf, welche über einen Querschenkel 106 miteinander fest verbunden sind. An den Außenseiten der Längsschenkel 104 ist jeweils ein Fahrschiff 120 angebracht, welches im dargestellten Ausführungsbeispiel mit umlaufenden Raupenketten versehen ist. An der Oberseite des Querschenkels 106 ist eine Antriebs- und Steuereinheit 118 angeordnet, welche eine Energieversorgung und eine Steuereinrichtung umfasst. Das Transportfahrzeug 100 kann kabelgebunden oder kabellos ferngesteuert sein. Alternativ kann an der Antriebs- und Steuereinheit 118 auch ein Bedienstand für einen Bediener vorgesehen sein.

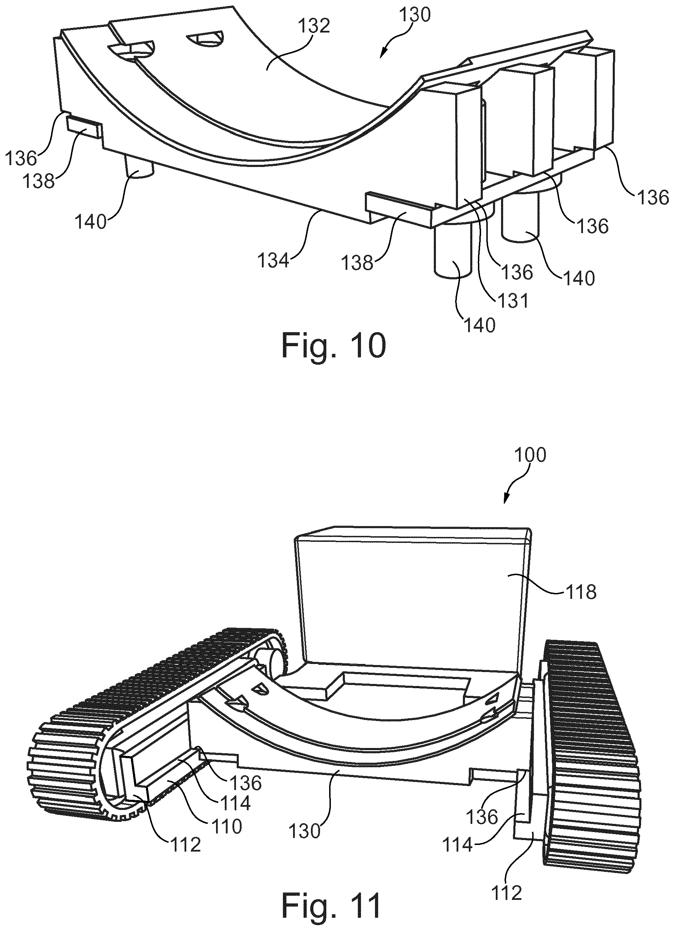

Entlang der Innenseiten der Längsschenkel 104 des Fahrgestelles 102 sind schienenartige Leisten 112 angeordnet, welche zusammen mit dem Querschenkel 106 eine Ablagefläche 114 bilden. Aufgrund der U-förmigen Ausgestaltung des Fahrgestelles 102 bleibt ein Mittenbereich frei, wodurch ein Aufnahmeraum 108 für ein Aufnahmegestell 130 gebildet ist. Das Aufnahmegestell 130, welches in Fig. 10 dargestellt ist, wird durch die Halterung 110 an dem Transportfahrzeug 100 aufgenommen und gehalten.

Das Aufnahmegestell 130 gemäß Fig. 10 weist eine Rahmenstruktur 131 mit einer teilzylindrisch gebogenen oberen Aufnahmeseite 132 auf. Die Aufnahmeseite 132 ist zum Aufnehmen und Halten eines trommelförmigen Längsmoduls der zuvor beschriebenen Vollschnittmaschine 10 ausgebildet. An einer Unterseite 134 des Aufnahmegestells 130 sind seitliche Auflageleisten 136 angeordnet. Weiterhin sind seitliche Lagerplatten 138 an der Unterseite 134 angeordnet, an welchen ausfahrbare stempelförmige Füße 140 angeordnet sind. Die Füße 140 können über nicht dargestellte innere Stellzylinder zwischen der in Fig. 10 dargestellten Ausfahrposition und einer eingefahrenen Rückzugsposition verfahren werden. Die Stellzylinder können hydraulisch betätigbar sein.

Die Ausfahrposition der bolzenartigen Füße 140 ist dann eingenommen, wenn das Aufnahmegestell 130 am Boden oder auf einer Montageplatte abgestellt ist. In dieser Position kann das Transportfahrzeug 100 mit der Halterung 110 am Fahrgestell 102 unter das Aufnahmegestell 130 fahren. Durch Einfahren der Füße 140 wird das Aufnahmegestell 130 abgesenkt, wobei die Auflageleisten 136 mit der Ablagefläche 114 der schienenartigen Leisten 112 der Halterung 110 am Fahrgestell 102 in Kontakt kommen. Die Energieversorgung der Stellzylinder der Füße 140 kann über die Anschluss- und Steuereinheit 118 des Transportfahrzeuges 100 über nicht dargestellte lösbare Versorgungsleitungen erfolgen. Nachdem das Aufnahmegestell 130 auf der Halterung 110 im Aufnahmeraum 108 des Transportfahrzeuges 100 abgesetzt ist, wie in Fig. 11 dargestellt, kann das Aufnahmegestell 130 durch das Transportfahrzeug 100 verfahren werden.

Das Transportfahrzeug 100 mit dem Aufnahmegestell 130 kann nunmehr etwa zum Demontieren einer Vollschnittmaschine 10 verfahren werden. Nach dem Erstellen einer ersten Nebenstrecke 2a durch die Vollschnittmaschine 10 kann durch das Transportfahrzeug 100 ein erstes Längsmodul 20 aufgenommen werden, wie etwa in Fig. 12 dargestellt ist. Das Aufnahmegestell 130 sowie das Transportfahrzeug 100 sind insgesamt so ausgelegt, dass das erste Längsmodul 20, welches als ein Schneidkopf 22 mit nach hinten vorstehenden Drehantrieben 28 ausgebildet ist, in kompakter Weise aufgenommen werden kann. Durch die Anordnung der Halterung 110 zwischen den zwei riegelartigen Fahrschiffen 120 kann die Bauhöhe der Fahrschiffe 120 zumindest teilweise als Aufnahmeraum mit genutzt werden. Hierdurch wird die Gesamthöhe des Transportfahrzeuges 100 mit dem aufgenommenen Längsmodul 20 gering gehalten, so dass aufgrund der erreichten kompakten Anordnung ein sehr gutes Transportieren und Handhaben bei den begrenzten Raumverhältnissen unter Tage ermöglicht wird. In der Darstellung gemäß Fig. 12 sind die als Verbindungslöcher ausgebildeten Verbindungmittel 40 an einer Rückwand des ersten Längsmoduls 20 erkennbar. Die Verbindungsmittel 40 korrespondieren mit dem Verbindungsmittel 40 an dem darauffolgenden zweiten Längsmodul 30, welche im Zusammenhang mit Fig. 6 erläutert wurden. Über entsprechende Schraubbolzen und Schraubmuttern können die Längsmodule lösbar miteinander gekoppelt werden.

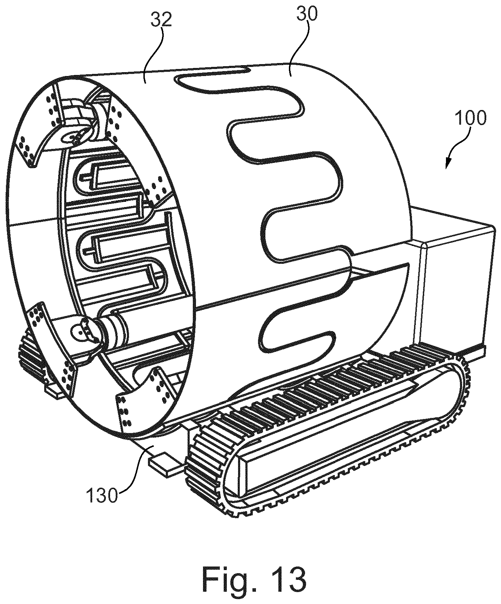

Gemäß Fig. 13 ist dargestellt, dass das Transportfahrzeug 100 auch das zweite Längsmodul 30 aufnehmen kann, welches als Vorschubeinheit 32 ausgebildet ist. Das zweite Längsmodul 30 ist auf einem palettenförmigen Aufnahmegestell 130 angeordnet, welches speziell für das zweite Längsmodul 30 ausgebildet sein kann.

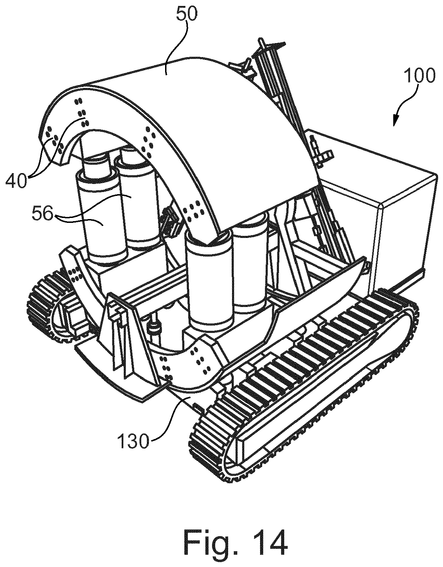

In Fig. 14 ist das erfindungsgemäße Transportfahrzeug 100 mit dem dritten Längsmodul 50 dargestellt. Das dritte Längsmodul 50 ist ebenfalls auf einem Aufnahmegestell 130 abgelegt, welches von dem Transportfahrzeug 100 aufgenommen und gehalten ist. Auch das Aufnahmegestell 130 für das dritte Längsmodul 50 kann als ein Universalaufnahmegestell 130 oder speziell für die Form des dritten Längsmoduls 50 ausgebildet sein. Insbesondere ist das Aufnahmegestell 130 so ausgebildet, dass die Längsmodule in beiden Längsausrichtungen aufgenommen werden können.

Der Darstellung gemäß Fig. 14 sind die Anordnung der insgesamt vier Spannzylinder 56 zum Verstellen des oberen bogenförmigen Spannelementes 54 sowie das Lochbild der Verbindungsmittel 40 besonders anschaulich zu entnehmen.

Das Umsetzen einer erfindungsgemäßen Vollschnittmaschine 10 nach dem erfindungsgemäßen Verfahren kann insbesondere dadurch erfolgen, dass nach dem Erstellen einer ersten Herrichtungs- oder Abbaustrecke 2a die einzelnen Längsmodule von einem Transportfahrzeug 100 mit einem Aufnahmegestell 130 aufgenommen werden und an einer Zwischenposition das Aufnahmegestell 130 mit dem jeweiligen Längsmodul zunächst abgesetzt werden. Durch ein zweites Transportfahrzeug 100 oder durch ein entsprechendes Rangieren des ersten Transportfahrzeuges 100 kann das Längsmodul mit dem Aufnahmegestell 130 von der entgegengesetzten Seite wieder aufgenommen werden, so dass ein Wenden und damit ein Zusammenbau der Längsmodule mit geänderter Vortriebsrichtung ermöglicht wird. Grundsätzlich kann durch ein erfindungsgemäßes Transportfahrzeug 100 auch eine Gesamteinheit einer Vollschnittmaschine 10 aufgenommen werden, sofern diese mit einer kompakten Gesamtlänge von einigen Metern ausgebildet ist.

## Patentansprüche

1. Transportfahrzeug zum Transportieren von Längsmodulen (20, 30, 50) einer Vollschnittmaschine (10) mit einem Fahrgestell (102), welches zwei Fahrschiffe (120) aufweist, zwischen denen ein Aufnahmeraum (108) für ein Aufnahmegestell (130) für ein Längsmodul (20, 30, 50) der Vollschnittmaschine (10) ausgebildet ist,
**dadurch gekennzeichnet,**
**dass** das Aufnahmegestell (130) als eine Palette ausgebildet ist, welche lösbar an dem Fahrgestell (102) angebracht ist, und
**dass** das Aufnahmegestell (130) mit dem Längsmodul (20, 30, 50) sowohl in einer ersten Längsrichtung als auch in umgekehrter Längsrichtung des Aufnahmegestells (130) in den Aufnahmeraum (108) des Fahrgestells (102) einführbar ist.

2. Transportfahrzeug nach Anspruch 1,
**dadurch gekennzeichnet,**
**dass** das Aufnahmegestell (130) eine obere Aufnahmeseite (132) aufweist, welche zum Ablegen und Halten eines trommelförmigen Längsmoduls (20, 30, 50) ausgebildet ist.

3. Transportfahrzeug nach einem der Ansprüche 1 oder 2,
**dadurch gekennzeichnet,**
**dass** das Fahrgestell (102) eine U-förmige Anordnung mit zwei Längsschenkeln (104) aufweist und
**dass** an jedem Längsschenkel (104) jeweils ein Fahrschiff (120) angeordnet ist.

4. Transportfahrzeug nach einem der Ansprüche 1 bis 3,
**dadurch gekennzeichnet,**
**dass** an dem Fahrgestell (102) eine Halterung (110) mit mindestens einer schienenartigen Leiste (112) vorgesehen ist, auf welcher das Aufnahmegestell (130) aufliegt.

5. Transportfahrzeug nach Anspruch 4,
**dadurch gekennzeichnet,**
**dass** die Halterung (110) zwei schienenartige Leisten (112) aufweist, wobei je eine Leiste (112) entlang den Fahrschiffen (120) angeordnet ist.

6. Transportfahrzeug nach einem der Ansprüche 1 bis 5,
**dadurch gekennzeichnet,**
**dass** an einem Querschenkel (106) des U-förmigen Fahrgestells (102) eine Antriebs- und Steuereinheit (118) angeordnet ist.

7. Aufnahmegestell eines Transportfahrzeugs (100) nach einem der Ansprüche 1 bis 6, für ein Längsmodul (20, 30, 50) einer Vollschnittmaschine (10), wobei
- das Aufnahmegestell (130) als eine Palette ausgebildet ist, deren obere Aufnahmeseite (132) zum Ablegen und Halten eines trommelförmigen Längsmoduls (20, 30, 50) ausgebildet ist, und
- das Aufnahmegestell (130) sowohl in einer ersten Längsrichtung als auch in einer zweiten Längsrichtung des Aufnahmegestells (130) in einem Aufnahmeraum (108) des Transportfahrzeugs (100) einführbar ist.

8. Aufnahmegestell nach Anspruch 7,
**dadurch gekennzeichnet,**
**dass** an der Unterseite (134) höhenverstellbare Füße (140) angeordnet sind.

9. Aufnahmegestell nach Anspruch 7 oder 8,
**dadurch gekennzeichnet,**
**dass** entlang der Längsseiten der Palette Auflageleisten (136) vorgesehen sind.

10. Verfahren zum Versetzen einer Vollschnittmaschine (10), welche aus mindestens zwei Längsmodulen (20, 30, 50) aufgebaut ist,
wobei die Längsmodule (20, 30, 50) voneinander gelöst werden,
**dadurch gekennzeichnet,**
**dass** die gelösten Längsmodule (20, 30, 50) nacheinander mit einem Aufnahmegestell (130) von einem Transportfahrzeug (100) aufgenommen werden, welches nach einem der Ansprüche 1 bis 6 ausgebildet ist,
**dass** ein palettenartiges Aufnahmegestell (130) mit einem Längsmodul (20, 30, 50) zunächst in einer ersten Längsrichtung aufgenommen wird und
**dass** das Aufnahmegestell (130) mit dem Längsmodul (20, 30, 50) von dem Transportfahrzeug (10) abgesetzt und anschließend in umgekehrter Längsrichtung wieder aufgenommen wird.

11. Verfahren nach Anspruch 10,
**dadurch gekennzeichnet,**
**dass** die Längsmodule (20, 30, 50) mit dem Aufnahmegestell (130) und wieder zu der Vollschnittmaschine (10) verbunden werden.

12. Verfahren nach einem der Ansprüche 11 oder 11,
**dadurch gekennzeichnet,**
**dass** das Verfahren unter Tage durchgeführt wird.

## Claims

1. Transport vehicle for transporting longitudinal modules (20, 30, 50) of a full face excavating machine (10) with a chassis (102), which has two crawlers (120), between which a receiving space (108) is formed for a receiving frame (130) for a longitudinal module (20, 30, 50) of the full face excavating machine (10),
**characterized in that**
the receiving frame (130) is designed as a pallet, which is affixed to the chassis (102) and can be detached, and
that the receiving frame (130) with the longitudinal module (20, 30, 50) can be introduced in the receiving space (108) of the chassis (102) both in a first longitudinal direction as well as in the opposite longitudinal direction of the receiving frame (130).

2. Transport vehicle according to claim 1,
**characterized in that**
the receiving frame (130) comprises an upper receiving surface (132), which is designed to put down and hold a drum-shaped longitudinal module (20, 30, 50).

3. Transport vehicle according to one of the claims 1 or 2,
**characterized in that**
the chassis (102) comprises a U-shaped arrangement with two longitudinal legs (104), and
that one crawler (120) is respectively arranged at each longitudinal leg (104).

4. Transport vehicle according to one of the claims 1 to 3,
**characterized in that**
a bracket (110) with at least one rail-like bar (112) is provided at the chassis (102), on which the receiving frame (130) lies.

5. Transport vehicle according to claim 4,
**characterized in that**
the bracket (110) comprises two rail-like bars (112), whereby one bar (112) each is arranged alongside the crawlers (120).

6. Transport vehicle according to one of the claims 1 to 5,
**characterized in that**
a drive and control unit (118) is arranged at a cross leg (106) of the U-shaped chassis (102).

7. Receiving frame of a transport vehicle (100) according to one of the claims 1 to 6, for a longitudinal module (20, 30, 50) of a full face excavating machine (10), whereby
- the receiving frame (130) is designed as a pallet, the upper receiving surface (132) of which is designed to put down and hold a drum-shaped longitudinal module (20, 30, 50), and
- the receiving frame (130) can be introduced in a receiving space (108) of the transport vehicle (100) both in a first longitudinal direction as well as in a second longitudinal direction of the receiving frame (130).

8. Receiving frame according to claim 7,
**characterized in that**
height-adjustable feet (140) are arranged at the bottom side (134).

9. Receiving frame according to claim 7 or 8,
**characterized in that**
support bars (136) are provided alongside the longitudinal sides of the pallet.

10. Method for relocating a full face excavating machine (10) that is built up from at least two longitudinal modules (20, 30, 50),
whereby the longitudinal modules (20, 30, 50) are released from one another,
**characterized in that**
the released longitudinal modules (20, 30, 50) are successively received by a receiving frame (130) of a transport vehicle (100), which is designed in accordance with one of the claims 1 to 6,
a pallet-like receiving frame (130) with a longitudinal module (20, 30, 50) is firstly received in a first longitudinal direction, and
that the receiving frame (130) with the longitudinal module (20, 30, 50) is put down from the transport vehicle (10) and is subsequently received again in the opposite longitudinal direction.

11. Method according to claim 10,
**characterized in that**
the longitudinal modules (20, 30, 50) are connected with the receiving frame (130) and reconnected to form the full face excavating machine (10).

12. Method according to one of the claims 10 or 11,
**characterized in that**
the method is implemented underground.

## Revendications

1. Véhicule de transport servant à transporter des modules longitudinaux (20, 30, 50) d'une machine pour le creusement en section pleine (10) avec un châssis de roulement (102), lequel présente deux chenilles (120), entre lesquelles est réalisé un espace de réception (108) pour un châssis de réception (130) pour un module longitudinal (20, 30, 50) de la machine pour le creusement en section pleine (10),
**caractérisé en ce**
**que** le châssis de réception (130) est réalisé en tant qu'une palette, laquelle est installée de manière amovible au niveau du châssis de roulement (102), et
**que** le châssis de réception (130) peut être introduit avec le module longitudinal (20, 30, 50) à la fois dans une première direction longitudinale et dans une direction longitudinale inverse du châssis de réception (130) dans l'espace de réception (108) du châssis de roulement (102).

2. Véhicule de transport selon la revendication 1,
**caractérisé en ce**
**que** le châssis de réception (130) présente un côté de réception supérieur (132), lequel est réalisé pour déposer et maintenir un module longitudinal (20, 30, 50) en forme de tambour.

3. Véhicule de transport selon l'une quelconque des revendications 1 ou 2,
**caractérisé en ce**
**que** le châssis de roulement (102) présente un ensemble en forme de U avec deux branches longitudinales (104), et
**que** respectivement une chenille (120) est disposée au niveau de chaque branche longitudinale (104).

4. Véhicule de transport selon l'une quelconque des revendications 1 à 3,
**caractérisé en ce**
**qu'**est prévue au niveau du châssis de roulement (102) une fixation (110) avec au moins une baguette (112) de type rail, sur laquelle repose le châssis de réception (130).

5. Véhicule de transport selon la revendication 4,
**caractérisé en ce**
**que** la fixation (110) présente deux baguettes (112) de type rail, dans lequel respectivement une baguette (112) est disposée le long des chenilles (120).

6. Véhicule de transport selon l'une quelconque des revendications 1 à 5,
**caractérisé en ce**
**qu'**une unité d'entraînement et de commande (118) est disposée au niveau d'une branche transversale (106) du châssis de roulement (102) en forme de U.

7. Châssis de réception d'un véhicule de transport (100) selon l'une quelconque des revendications 1 à 6, pour un module longitudinal (20, 30, 50) d'une machine pour le creusement en section pleine (10), dans lequel
- le châssis de réception (130) est réalisé comme une palette, dont le côté de réception supérieur (132) est réalisé pour déposer et maintenir un module longitudinal (20, 30, 50) de type tambour, et
- le châssis de réception (130) peut être introduit à la fois dans une première direction longitudinale et dans une deuxième direction longitudinale du châssis de réception (130) dans un espace de réception (108) du véhicule de transport (100).

8. Châssis de réception selon la revendication 7,
**caractérisé en ce**
**que** des pieds (140) pouvant être ajustés en hauteur sont disposés au niveau du côté inférieur (134).

9. Châssis de réception selon la revendication 7 ou 8,
**caractérisé en ce**
**que** des baguettes de support (136) sont prévues le long des côtés longitudinaux de la palette.

10. Procédé servant à déplacer une machine pour le creusement en section pleine (10), laquelle est élaborée à partir d'au moins deux modules longitudinaux (20, 30, 50),
dans lequel les modules longitudinaux (20, 30, 50) sont séparés l'un de l'autre,
**caractérisé en ce**
**que** les modules longitudinaux (20, 30, 50) détachés sont reçus les uns après les autres avec un châssis de réception (130) par un véhicule de transport (100), lequel est réalisé selon l'une quelconque des revendications 1 à 6,
**qu'**un châssis de réception (130) de type palette est reçu avec un module longitudinal (20, 30, 50) en premier lieu dans une première direction longitudinale, et
**que** le châssis de réception (130) est déposé avec le module longitudinal (20, 30, 50) par le véhicule de transport (10) puis est à nouveau réceptionné dans une direction longitudinale inverse.

11. Procédé selon la revendication 10,
**caractérisé en ce**
**que** les modules longitudinaux (20, 30, 50) sont reliés au châssis de réception (130) puis pour former la machine pour le creusement en section pleine (10).

12. Procédé selon l'une quelconque des revendications 11 ou 11,
**caractérisé en ce**
**que** le procédé est effectué sous terre.
